# FASCICULE DE BREVET EUROPEEN

(11) **EP 0 991 492 B1**
(45) Date de publication et mention de la délivrance du brevet: **02.04.2003**
(21) Numéro de dépôt: 98932244.1
(22) Date de dépôt: 19.06.1998
(51) Int. Cl.: B23K 3/03

(54) **FER A SOUDER ELECTRIQUE COMPACT A HAUT RENDEMENT**
VERBESSERTER, KOMPAKTER, ELEKTRISCHER LÖTKOLBEN
COMPACT HIGH PERFORMANCE ELECTRIC SOLDERING IRON

(30) Priorité: 25.06.1997 FR 9707946
(43) Date de publication de la demande: 12.04.2000
(73) Titulaire: GUILBERT-EXPRESS, F-75011 Paris (FR)
(72) Inventeur: LE MARCHAND, Alain, F-95270 Asnières sur Oise (FR); GUILLOU, Yves, F-77500 Chelles (FR)
(74) Mandataire: Rousset, Jean-Claude
(86) Numéro de dépôt international: FR9801296
(87) Numéro de publication internationale: WO99000214

(56) Documents cités:
- EP-A- 0 499 734
- US-A- 4 571 482
- PATENT ABSTRACTS OF JAPAN vol. 13, no. 141 (P-853), 7 avril 1989 & JP 63 307345 A (TAIYO YUDEN CO LTD), 15 décembre 1988

## Description

L'invention concerne un fer à souder électrique comprenant un corps définissant des moyens de préhension, une panne, une résistance chauffante en contact thermique avec la panne et des moyens de raccordement électrique pour l'alimentation en courant de la résistance.

Dans les fers à souder connus de ce genre (Voir US-A-4 571 482), la résistance chauffante est montée sur un support disposé au voisinage de la panne, le support pouvant entourer la panne ou inversement. Cette disposition implique un encombrement relativement élevé. De plus, la résistance est séparée de la panne par un intervalle d'air et/ou par des pièces distinctes, ce qui nuit à la transmission de chaleur de la résistance à la panne et limite le rendement énergétique du fer.

Le but de l'invention est de remédier à ces inconvénients.

L'invention vise notamment un fer à souder du genre défini en introduction, et prévoit que la panne et la résistance chauffante sont intimement liées par cuisson pour former un composant unitaire.

Un tel composant unitaire est beaucoup moins encombrant que l'ensemble formé par la panne, la résistance et son support dans les fers connus, et permet une transmission de chaleur directe et plus efficace.

Des caractéristiques optionnelles de l'invention, complémentaires ou alternatives, sont énoncées ci-après:
- Lesdits moyens de raccordement comprennent au moins un conducteur de liaison amenant le courant à une borne de la résistance, incorporé audit composant unitaire et intimement lié à la panne et à la résistance chauffante par cuisson.
- La panne est sous forme d'une plaque plane d'épaisseur sensiblement uniforme.
- Le rapport entre la largeur de la panne, dans la région de sa longueur où elle est liée à la résistance, et son épaisseur est supérieur à 4.
- La résistance et le cas échéant ledit conducteur de liaison sont sous forme d'un revêtement déposé, notamment par sérigraphie, sur au moins une face de la panne.
- Ledit revêtement comprend:
   - une première couche électriquement isolante d'une épaisseur adaptée à la tension d'isolement voulue;
   - une couche conductrice définissant au moins deux conducteurs de liaison terminés chacun par un plot de contact amont et un plot de contact aval, et une couche résistive définissant ladite résistance chauffante, déposées dans un ordre quelconque sur la première couche de manière que la couche résistive soit en contact avec les plots aval des conducteurs de liaison; et optionnellement
   - une quatrième couche électriquement isolante recouvrant les seconde et troisième couches à l'exception desdits plots amont.
- Le matériau de la panne a un coefficient de dilatation thermique linéaire compris entre 5.10⁻⁶ et 15.10⁻⁶ K⁻¹ dans l'intervalle de température de 20 à 400 °C.
- Le matériau de la panne est un acier inoxydable ferritique.
- La résistance a un coefficient de température positif supérieur à 2 Ω.K⁻¹ dans l'intervalle de température de 20 à 400 °C. La résistance peut également avoir une valeur fixe.
- Ledit composant unitaire est fixé audit corps par une partie arrière et porte la résistance chauffante sur une partie avant en porte-à-faux.
- Le corps présente des orifices de ventilation en regard de la partie en porte-à-faux du composant unitaire.
- Le corps recouvre à distance la résistance.
- Le corps présente deux lèvres en saillie vers l'avant en regard des deux faces principales du composant unitaire respectivement.
- Les moyens de raccordement électrique comprennent au moins deux éléments de connexion logés dans le corps, reliant le composant unitaire à un câble d'alimentation.
- Les éléments de connexion exercent une pression de contact élastique sur le composant unitaire.
- Chaque élément de connexion est une lame élastique divisée en deux branches, symétriques l'une de l'autre par rapport à un plan orienté dans la direction longitudinale du fer et perpendiculaire à une face principale plane du composant unitaire, par une fente longitudinale débouchant à une première extrémité, la lame étant pliée selon une ligne transversale de manière que chaque branche, au voisinage de ladite première extrémité, soit propre à s'appuyer élastiquement sur ladite face principale plane, tandis que la région de la lame comprise entre sa seconde extrémité et la ligne de pliage est fixée de manière à s'étendre selon un plan perpendiculaire à ladite direction longitudinale, l'âme conductrice d'un fil gainé du câble d'alimentation traversant la fente, dont les bords viennent en contact avec l'âme en incisant la gaine.
- La panne présente des moyens de butée permettant de l'immobiliser dans la direction longitudinale du fer.
- Le corps comprend deux demi-coquilles raccordées entre elles sensiblement dans le plan principal du composant unitaire.
- Les deux demi-coquilles sont mutuellement assemblées avec accrochage rigide à l'arrière et avec encliquetage à l'avant.
- Un appendice séparable, venu de moulage avec le corps, présente des moyens de suspension et/ou une surface de réception d'informations pour la présentation du fer sur un lieu de vente ou d'exposition.

L'invention a également pour objet un composant unitaire pour un fer à souder tel que défini ci-dessus, comprenant au moins une panne et une résistance chauffante intimement liées par cuisson, ainsi qu'un procédé pour réaliser un tel composant unitaire.

Dans le procédé selon l'invention, on dépose, notamment par sérigraphie, la résistance et le cas échéant un conducteur de liaison sous forme d'un revêtement sur au moins une face de la panne.

Selon un mode de réalisation du procédé, on dépose un revêtement comportant des résistances et le cas échéant des conducteurs de liaison disposés en différentes zones de la surface d'une plaque et on découpe la plaque ainsi revêtue, notamment au moyen d'un rayon laser, selon des lignes passant chacune entre deux résistances, pour obtenir une multiplicité de composants unitaires.

Avantageusement, la plaque présente, sur l'un et/ou l'autre de deux bords opposés, des saillies destinées chacune à former une pointe de travail d'une panne, qu'on trempe dans un bain d'étamage avant de découper la plaque selon des lignes allant de l'un à l'autre desdits bords opposés.

Les caractéristiques et avantages de l'invention seront exposés plus en détail dans la description ci-après, en se référant aux dessins annexés, où des éléments identiques ou analogues sont désignés dans toutes les figures par les mêmes numéros de référence. Sur ces dessins:
- la figure 1 est une vue de côté en coupe longitudinale d'un fer à souder selon l'invention;
- la figure 2 est une vue de dessus de la demi-coquille inférieure sur laquelle sont montés les éléments de connexion reliés au câble d'alimentation électrique;
- la figure 3 est une vue de dessous de la demi-coquille supérieure sur laquelle est montée la partie commune du câble d'alimentation;
- la figure 4 est une vue analogue à la figure 3, faisant apparaître en outre le composant unitaire formé par la panne et la résistance chauffante;
- les figures 5 à 8 sont des vues en coupe transversale du fer, selon les lignes V-V, VI-VI, VII-VII et VIII-VIII respectivement de la figure 1;
- les figures 9 et 10 sont des vues partielles en coupe selon les lignes IX-IX et X-X respectivement de la figure 7;
- la figure 11 est une vue de dessous d'une variante du fer à souder; et
- la figure 12 représente une plaque revêtue et découpée en une multiplicité de composants unitaires selon l'invention.

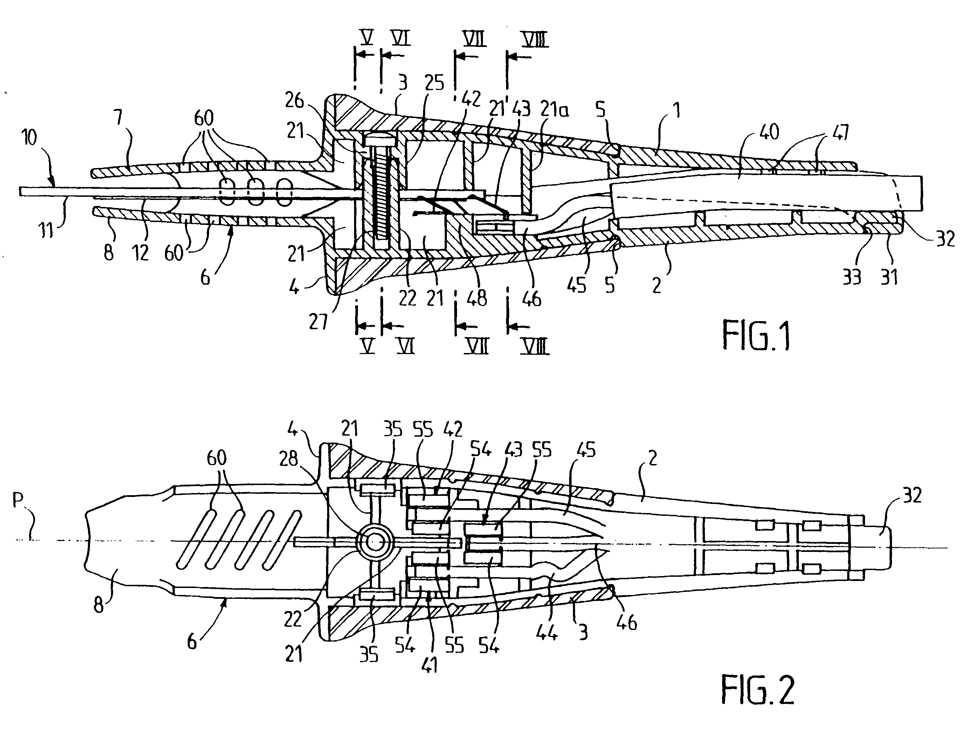

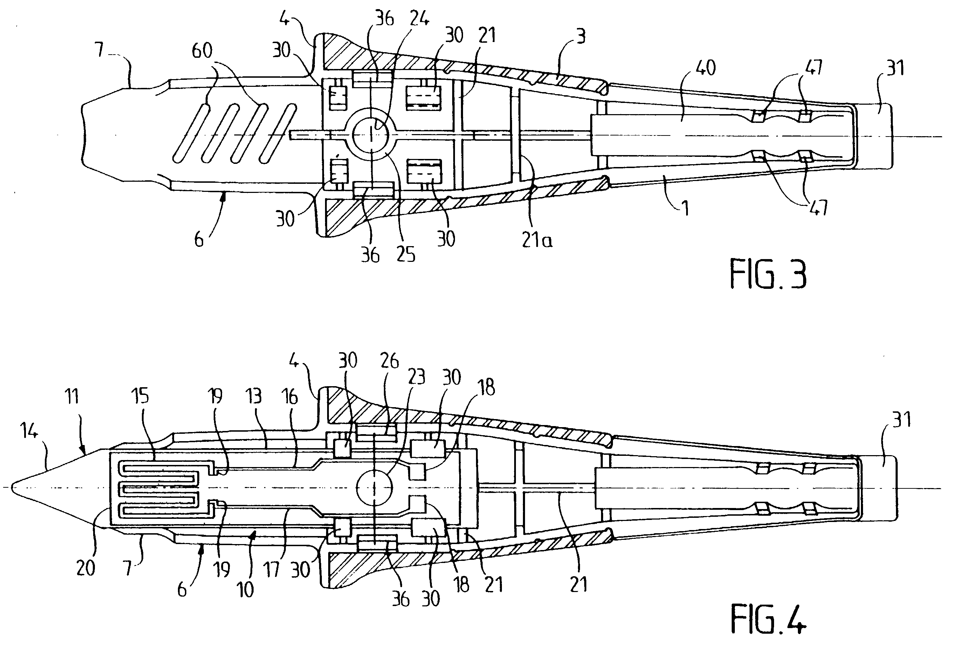

Le fer à souder électrique représenté sur les figures 1 à 10 comprend un corps tubulaire allongé formé de trois pièces mutuellement assemblées, à savoir une demi-coquille supérieure 1 et une demi-coquille inférieure 2 en matière plastique moulée, et un manchon 3 en élastomère. Les demi-coquilles 1 et 2 se raccordent mutuellement selon un plan médian horizontal, l'ensemble ainsi formé ayant sensiblement une surface extérieure de révolution de diamètre généralement croissant depuis l'extrémité arrière, à droite sur les figures 1 à 4, jusqu'à une bride 4 faisant saillie radialement vers l'extérieur. Le manchon 3 est sensiblement de révolution et son diamètre va généralement en croissant de l'arrière vers l'avant. Il entoure étroitement les demi-coquilles et s'étend longitudinalement entre la bride 4 à l'avant et un épaulement 5 des demi-coquilles à l'arrière. En avant de la bride 4, l'ensemble formé par les demi-coquilles présente une région tubulaire 6 de profil non circulaire allongée horizontalement, au-delà de laquelle font saillie une lèvre supérieure 7 et une lèvre inférieure 8 formées respectivement par les pièces 1 et 2.

Dans le corps est fixé, selon l'invention, un composant unitaire 10 comprenant une panne plate 11 et un revêtement 12 déposé par sérigraphie sur la face inférieure de la panne. La panne est découpée dans une tôle d'acier inoxydable ferritique d'une épaisseur supérieure à 0,5 mm et avantageusement voisine de 1,5 mm. Elle comprend une partie rectangulaire 13 allongée dans la direction longitudinale du fer, d'une largeur supérieure à 5 mm et avantageusement voisine de 13 mm, prolongée par une partie 14 en forme de triangle isocèle à sommet arrondi, dont la base est confondue avec l'un des petits côtés de la partie rectangulaire 13. Le revêtement 12 comprend, électriquement isolée par rapport à la panne 11, une résistance chauffante 15 sous forme d'un trajet conducteur, disposée dans le tiers avant de la partie rectangulaire 13, et deux conducteurs de liaison 16, 17 sous forme de trajets conducteurs, allongés dans la direction longitudinale de la panne et terminés chacun par un plot de contact amont 18 proche de l'extrémité arrière de la panne et par un plot de contact aval 19, les deux plots 19 étant en contact respectivement avec les deux extrémités de la résistance 15.

Le revêtement 12 peut être déposé par les techniques habituelles de sérigraphie, en utilisant des matériaux ayant des propriétés électriques et thermiques appropriées. De préférence, on dépose d'abord sur la panne une première couche électriquement isolante d'une épaisseur appropriée, en particulier supérieure à 50 µm pour une tension de claquage de 1000 V, qui dans l'exemple illustré s'étend sur une surface rectangulaire 20 représentant la majeure partie de la longueur et de la largeur de la partie rectangulaire 13 de la panne. Sur cette couche isolante on dépose une couche conductrice définissant les conducteurs 16 et 17, puis une couche conductrice définissant la résistance 15, les extrémités du trajet de la couche 15 étant déposées sur les plots 19 et le reste de ce trajet directement sur la couche isolante. L'ordre de ces deux couches peut être inversé. Enfin, une autre couche isolante facultative recouvre les deux couches conductrices à l'exception des plots 18, et sert notamment à la protection contre la pollution. Une cuisson individuelle peut être réalisée après le dépôt de chaque couche, ou bien des couches successives peuvent être cuites ensemble. Le conducteur formant les trajets 16 et 17 peut être également déposé, en même temps, sur la partie avant de la panne non revêtue par la première couche isolante, de manière à améliorer la conduction de chaleur vers la pointe de travail de la panne et à faciliter l'étamage de celle-ci.

La panne et le revêtement 12 ont des coefficients de dilatation voisins, celui du revêtement étant avantageusement légèrement supérieur à celui de la panne de façon à soumettre le revêtement à une contrainte de compression lors de l'échauffement. En particulier, la panne peut avoir un coefficient de dilatation thermique linéaire, dans le domaine utile de 20 à 400°C, compris entre 5.10⁻⁶ et 15.10⁻⁶ K⁻¹. Elle est avantageusement en acier inoxydable ferritique par exemple Z8C17. Elle peut également être en céramique auquel cas la première couche isolante est superflue.

Le composant 10 est fixé à l'arrière dans la région de révolution du corps, et se prolonge vers l'avant en porte-à-faux, sans contact avec le corps, dans la région aplatie 6 de celui-ci, entre les lèvres 7 et 8 et au-delà de celles-ci. Plus précisément, la partie du composant comportant le revêtement 12, et son extrémité arrière, sont disposées à l'intérieur du corps et entre les lèvres 7 et 8, tandis que l'extrémité avant de la partie rectangulaire 13 et la partie triangulaire 14 sont disposées en avant des lèvres. La fixation du composant 10 est obtenue au moyen de nervures appartenant aux demi-coquilles 1 et 2 et s'étendant verticalement vers le bas et vers le haut à partir des parois des demi-coquilles 1 et 2 respectivement. Certaines de ces nervures, indiquées collectivement par la référence 21, sont sous forme de voiles s'étendant selon des plans verticaux longitudinaux ou transversaux et venant en appui sur la face supérieure ou la face inférieure et/ou sur le bord arrière du composant 10 pour l'immobiliser dans la direction verticale et dans le sens avant-arrière. Une nervure cylindrique de révolution 22 de la demi-coquille 2 traverse pratiquement sans jeu un trou circulaire 23 du composant 10 de façon à immobiliser celui-ci en translation dans un plan horizontal. La nervure 22 s'engage par ailleurs, au-dessus du composant 10, dans un alésage axial traversant d'une nervure 25 de la demi-coquille 1, dont l'extrémité vient également en appui sur la face supérieure du composant 10. Le diamètre de l'alésage 24 est localement réduit pour définir une collerette intérieure 26 sur laquelle s'appuie axialement la tête d'une vis 27 qui se visse dans un alésage axial taraudé 28 de la nervure 22, réalisant l'assemblage mutuel des deux demi-coquilles au voisinage de l'extrémité avant de la partie de révolution du corps. La tête de la vis est noyée dans l'alésage 24 et recouverte par le manchon 3. L'immobilisation du composant 10 est complétée par des nervures 30 qui descendent verticalement depuis la paroi de la demi-coquille 1 pour venir s'appuyer sur les bords latéraux dudit composant et sont repliées en L pour soutenir les régions marginales de celui-ci.

A son extrémité arrière, la demi-coquille supérieure 1 présente une anse 31 qui soutient l'extrémité arrière 32 de la demi-coquille inférieure 2 et vient en butée vers l'avant sur un épaulement extérieur 33 de celle-ci, réalisant l'immobilisation mutuelle des deux demi-coquilles à leur partie arrière. Enfin, de chaque côté de la nervure cylindrique 22, la demi-coquille 2 possède deux pattes élastiques d'encliquetage 34 présentant à leur extrémité des saillies 35 tournées latéralement vers l'extérieur qui viennent s'accrocher sur les bords inférieurs d'ouvertures respectives 36 ménagées dans la paroi de la demi-coquille 1. Les ouvertures 36, ainsi que des ouvertures liées à la présence des pattes 30, sont masquées par le manchon 3.

La résistance 15 est alimentée en courant électrique par l'intermédiaire d'un câble d'alimentation 40 qui dans l'exemple illustré comporte trois fils. Trois lames élastiques de connexion 41, 42 et 43 relient respectivement les plots amont 18 des trajets conducteurs 16 et 17 et la masse de la panne aux fils de polarité 44 et 45 et au fil de terre 46 du câble 40. Le câble 40 pénètre dans le corps par l'extrémité arrière de celui-ci et est immobilisé axialement par pincement entre des nervures latérales 47 de la demi-coquille supérieure 1. Les extrémités avant des trois fils gainés font saillie au-delà de la gaine extérieure du câble et sont logées dans des canaux horizontaux longitudinaux définis par des nervures 48 formées sur le fond de la demi-coquille 2. Les trois lames de connexion 41-43 sont identiques, chacune d'elles étant pliée selon une ligne horizontale pour former un premier volet 51 s'étendant selon un plan vertical transversal, vers le bas à partir de la ligne 50, et s'engageant dans une fente correspondante ménagées dans les nervures 48, où il est immobilisé, et un second volet 52 qui au repos est orienté obliquement vers le haut et vers l'avant à partir de la ligne 50. Chaque lame est divisée en une branche gauche et une branche droite par une fente longitudinale médiane 53 qui s'étend depuis l'extrémité avant de la lame jusqu'au voisinage de son extrémité inférieure. La largeur de la fente est légèrement inférieure au diamètre de l'âme conductrice des fils 44-46 dans sa partie verticale 51, et s'évase dans la partie 52 pour atteindre une valeur supérieure au diamètre de la gaine isolante de ces mêmes fils. Le volet 52 est séparé par la fente 53 en deux demi-volets 54 et 55 qui peuvent pivoter indépendamment autour de la ligne de pliage 50. Lorsque le fer est assemblé, les deux demi-volets 54 et 55 de la lame 43 s'appuient élastiquement, symétriquement l'un de l'autre par rapport à un plan longitudinal de symétrie P du fer, sur la face inférieure de la panne 11, en arrière du revêtement 12. Pour les lames 41 et 42, qui sont décalées vers l'avant par rapport à la lame 43 et disposées symétriquement l'une de l'autre de part et d'autre du plan P, seul le demi-volet le plus proche de celui-ci s'appuie sur le plot 18 du trajet conducteur correspondant, le demi-volet placé vers l'extérieur étant rabattu vers le bas par la face inférieure de l'une des nervures 30 de la demi-coquille supérieure 1.

Des ouvertures de ventilation 60 sont ménagées dans la région aplatie 6 du corps, en regard des faces principales et des bords latéraux du composant 10.

L'assemblage du fer s'effectue comme suit. Si le câble 40 est muni d'une prise de raccordement au secteur, on le fait passer d'arrière en avant à travers l'extrémité arrière de la demi-coquille 1, au-dessus de l'anse 31. On engage les extrémités des fils 44-45, non dénudées et faisant saillie de la longueur voulue par rapport à la gaine extérieure du câble, dans la partie large des fentes 53 des lames de connexion correspondantes, préalablement mises en place dans la demi-coquille inférieure 2, et on les fait glisser vers le bas, le long des fentes, jusqu'à ce qu'elles reposent dans leur logement, les bords des fentes 53, dans la partie étroite de celles-ci, incisant alors les gaines individuelles des fils pour venir en contact avec les âmes conductrices de ceux-ci. On introduit par ailleurs le composant 10 dans la demi-coquille 1, de l'avant vers l'arrière, de manière qu'il s'insère latéralement entre les branches verticales des nervures 30 et verticalement entre les nervures 21 et 25 d'une part et les retours horizontaux des nervures 30 d'autre part, jusqu'à ce que son bord arrière vienne buter contre l'une des nervures longitudinales 21, le trou 23 étant alors en regard de l'alésage 24. Les deux demi-coquilles étant ainsi équipées, on fait coulisser la demi-coquille 1 vers l'avant le long du câble jusqu'à ce que l'extrémité arrière 32 de la demi-coquille 2 pénètre au-dessus de l'anse 31 et que l'épaulement 33 vienne en butée sur cette dernière, les deux demi-coquilles s'écartant verticalement l'une de l'autre vers l'avant. On les referme alors l'une sur l'autre, la nervure 22 traversant le trou 23 et s'engageant dans l'alésage 24 de la nervure 25, jusqu'à ce qu'une nervure longitudinale 21 de la demi-coquille 2 vienne s'appuyer sur la face inférieure du composant 10 et que les saillies 35 des pattes 34 viennent s'encliqueter dans les ouvertures 36. On visse alors la vis 27 pour rendre l'assemblage parfaitement stable, et on met en place le manchon 3 autour des deux demi-coquilles. Une nervure transversale verticale 21a de la demi-coquille 1 vient fermer les logements des fils 44-46, empêchant qu'ils se soulèvent et se dégagent des fentes des lames de connexion. Les demi-volets 54-55 des lames de connexion fléchissent élastiquement vers le bas pour assurer un contact sous pression avec les plots 18, les nervures 30 et la surface nue de la panne.

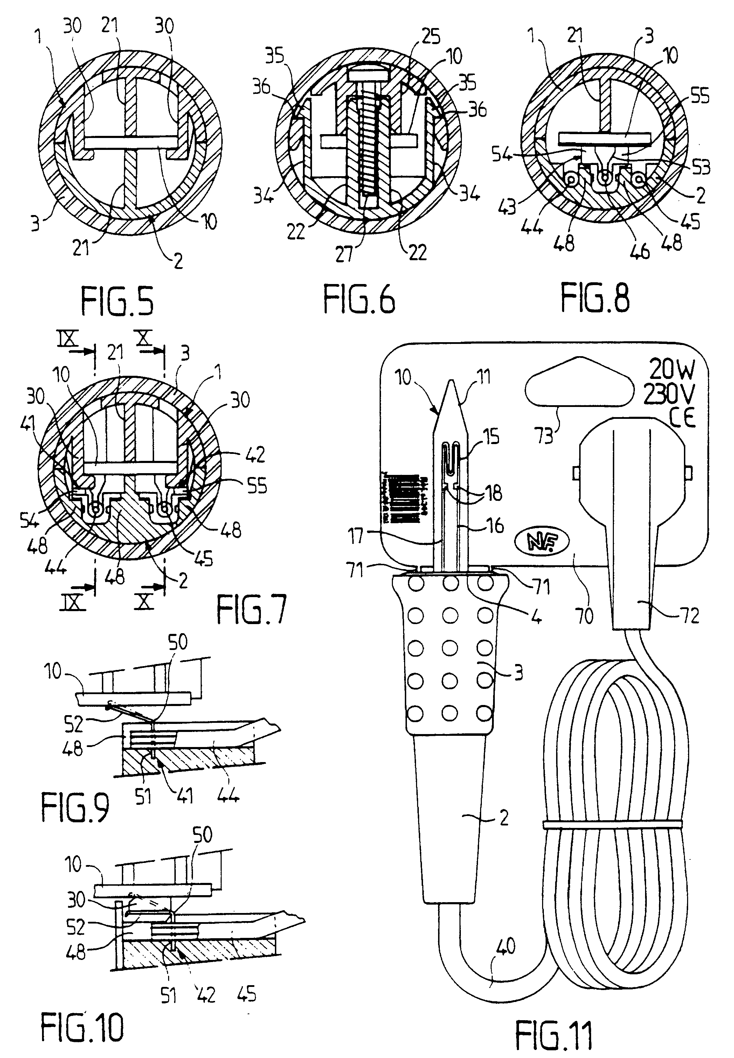

Le fer à souder représenté sur la figure 11 diffère de celui décrit précédemment par la suppression des parties 6, 7 et 8 du corps. Le revêtement définissant la résistance chauffante 15 et les conducteurs de liaison 16 et 17 est donc en grande partie apparent. Par ailleurs, la demi-coquille supérieure, située en arrière du plan de la figure, est formée de moulage avec une étiquette plane 70 qui lui est rattachée par deux pattes 71 au niveau de la bride 4 et qui s'étend parallèlement au plan du composant 10, celui-ci recouvrant une petite partie de l'une des faces de l'étiquette, tournée vers l'avant de la figure. Le câble 40 est muni d'une prise 72 pour le raccordement au secteur, dont les fiches mâles s'engagent dans des orifices ménagés dans l'étiquette 70. Celle-ci présente également une ouverture 73 permettant de la suspendre verticalement à un présentoir, le corps 1 du fer et le câble 40 étant eux-mêmes suspendus entre les pattes 71 et la prise 72. L'étiquette 70 porte des informations utiles pour les acheteurs éventuels du fer à souder sur un lieu de vente. Elle doit être retirée avant la mise en service du fer, par rupture des pattes minces 71.

Bien entendu, une étiquette analogue à celle qui vient d'être décrite peut être associée au fer des figures 1 à 10, en étant par exemple attachée par des pattes à l'extrémité de l'une des lèvres 7 et 8 du corps.

Le matériau de la résistance 15 est avantageusement choisi de manière à lui conférer un coefficient de température positif supérieur à 2 Ω.K⁻¹ dans l'intervalle de température utile de 20 à 400°C, assurant ainsi une montée en température rapide de la panne et une régulation automatique de la température de travail. Dans un exemple de réalisation, les matériaux mis en oeuvre et les températures de cuisson sont les suivants:
- première couche isolante: pâte à base d'oxydes d'aluminium, de cobalt et de baryum dans un verre fritté de silice; cuisson à partir de 700 °C;
- résistance: pâte à base d'oxyde de cuivre et de silicate de zirconium; cuisson à partir de 650 °C;
- conducteurs: pâte à base d'argent ou d'alliage argent-palladium et de verre fritté; cuisson à partir de 600 °C;
- seconde couche isolante: pâte de verre fritté; cuisson à partir de 550 °C.
Les constituants des pâtes ci-dessus sont dispersés dans un liant organique qui se vaporise lors de la cuisson. Pour toutes les couches, la température de cuisson peut être portée à 850 °C.

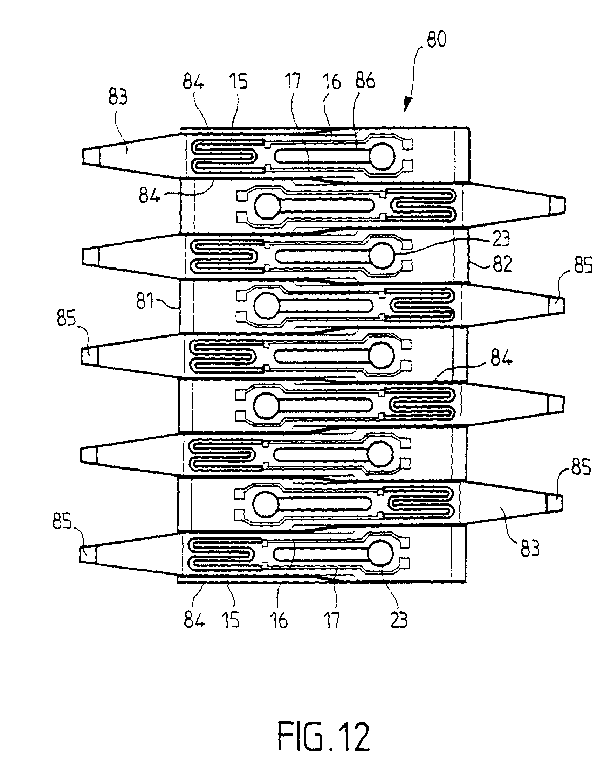

La figure 12 illustre le procédé selon l'invention pour la réalisation de plusieurs composants unitaires à partir d'une même plaque. On part d'une plaque plane 80 en acier inoxydable convenant pour les pannes. Cette plaque présente la forme d'un rectangle à partir des deux grands côtés 81, 82 duquel font saillie des appendices 83 qui sont effilés en forme de trapèzes isocèles. Les appendices 83 sont disposés en quinconce, c'est-à-dire que chaque appendice adjacent à l'un des côtés du rectangle se trouve en regard de l'intervalle entre deux appendices voisins de l'autre côté.

La plaque 80 est découpée, au moyen d'un rayon laser, selon des lignes transversales 84 s'étendant de l'un à l'autre des côtés 80 et 82 pour former des pannes, chaque panne comprenant l'un des appendices 83, qui constitue la partie, désignée ci-dessus par la référence 14, qui fait saillie en avant du corps du fer à souder, et la portion de rectangle de la plaque 80 située en regard de l'appendice 83 dans la direction latérale, qui forme la partie interne 13 de la panne.

Avant de découper la plaque selon les lignes 84, on y dépose les couches décrites plus haut sur chacune des bandes délimitées par ces lignes de découpe. Avant découpage également, on réalise les trous 23 de fixation des composants unitaires, et on met en place des couches d'étamage 85 sur les pointes des pannes, par trempage simultané des appendices 83 situés d'un même côté de la plaque. Pour alléger les pannes, les trous circulaires 23 peuvent être prolongés par des fentes longitudinales 86 disposées chacune entre les conducteurs 16 et 17 du composant correspondant, et les lignes de découpe 84 peuvent être non rectilignes de manière à obtenir des pannes de largeur variable. En variante, les appendices 83 peuvent être disposés tous sur le même côté de la plaque.

Au lieu d'une résistance unique déposée sur l'une des faces de la panne, le composant unitaire selon l'invention peut comporter une résistance déposée sur les deux faces de celle-ci, ou deux résistances ou plus alimentées séparément et déposées sur les deux faces ou sur l'une d'elles seulement. Bien que le dépôt par sérigraphie soit plus facile à réaliser sur les faces planes d'une tôle, la panne peut avoir une forme différente de celle d'une tôle plane.

## Revendications

1. Fer à souder électrique comprenant un corps (1-3) définissant des moyens de préhension, une panne (11), une résistance chauffante (15) en contact thermique avec la panne et des moyens de raccordement électrique (40, 41-43, 16, 17) pour l'alimentation en courant de la résistance, **caractérisé en ce que** la panne et la résistance chauffante sont intimement liées par cuisson pour former un composant unitaire (10).

2. Fer à souder selon la revendication 1, dans lequel lesdits moyens de raccordement comprennent au moins un conducteur de liaison (16, 17) amenant le courant à une borne de la résistance, incorporé audit composant unitaire (10) et intimement lié à la panne et à la résistance électrique par cuisson.

3. Fer à souder selon l'une des revendications 1 et 2, dans lequel la panne est sous forme d'une plaque plane d'épaisseur sensiblement uniforme.

4. Fer à souder selon la revendication 3, dans lequel le rapport entre la largeur de la panne, dans la région de sa longueur où elle est liée à la résistance, et son épaisseur est supérieur à 4.

5. Fer à souder selon l'une des revendications précédentes, dans lequel la résistance et le cas échéant ledit conducteur de liaison sont sous forme d'un revêtement (12) déposé, notamment par sérigraphie, sur au moins une face de la panne.

6. Fer à souder selon la revendication 5, dans lequel ledit revêtement comprend:
- une première couche électriquement isolante d'une épaisseur adaptée à la tension d'isolement voulue;
- une couche conductrice définissant au moins deux conducteurs de liaison (16, 17) terminés chacun par un plot de contact amont (18) et un plot de contact aval (19), et une couche résistive définissant ladite résistance chauffante (15), déposées dans un ordre quelconque sur la première couche de manière que la couche résistive soit en contact avec les plots aval (19) des conducteurs de liaison; et optionnellement
- une quatrième couche électriquement isolante recouvrant les seconde et troisième couches à l'exception desdits plots amont (18).

7. Fer à souder selon l'une des revendications précédentes, dans lequel le matériau de la panne a un coefficient de dilatation thermique linéaire compris entre 5.10⁻⁶ et 15.10⁻⁶ K⁻¹ dans l'intervalle de température de 20 à 400 °C.

8. Fer à souder selon la revendication 7, dans lequel le matériau de la panne est un acier inoxydable ferritique.

9. Fer à souder selon l'une des revendications précédentes, dans lequel la résistance a un coefficient de température positif supérieur à 2 Ω.K⁻¹ dans l'intervalle de température de 20 à 400 °C.

10. Fer à souder selon l'une des revendications précédentes, dans lequel ledit composant unitaire est fixé audit corps par une partie arrière et porte la résistance chauffante sur une partie avant en porte-à-faux.

11. Fer à souder selon la revendication 10, dans lequel le corps présente des orifices de ventilation (60) en regard de la partie en porte-à-faux du composant unitaire.

12. Fer à souder selon l'une des revendications précédentes, dans lequel le corps recouvre à distance la résistance.

13. Fer à souder selon l'une des revendications précédentes, dans lequel le corps présente deux lèvres (7, 8) en saillie vers l'avant en regard des deux faces principales du composant unitaire respectivement.

14. Fer à souder selon l'une des revendications précédentes, dans lequel les moyens de raccordement électrique comprennent au moins deux éléments de connexion (41, 42, 43) logés dans le corps, reliant le composant unitaire à un câble d'alimentation (40).

15. Fer à souder selon la revendication 14, dans lequel les éléments de connexion exercent une pression de contact élastique sur le composant unitaire.

16. Fer à souder selon la revendication 15, dans lequel chaque élément de connexion est une lame élastique divisée en deux branches, symétriques l'une de l'autre par rapport à un plan orienté dans la direction longitudinale du fer et perpendiculaire à une face principale plane du composant unitaire, par une fente longitudinale (53) débouchant à une première extrémité, la lame étant pliée selon une ligne transversale (50) de manière que chaque branche, au voisinage de ladite première extrémité, soit propre à s'appuyer élastiquement sur ladite face principale plane, tandis que la région (51) de la lame comprise entre sa seconde extrémité et la ligne de pliage est fixée de manière à s'étendre selon un plan perpendiculaire à ladite direction longitudinale, l'âme conductrice (44-46) d'un fil gainé du câble d'alimentation traversant la fente, dont les bords viennent en contact avec l'âme en incisant la gaine.

17. Fer à souder selon l'une des revendications précédentes, dans lequel la panne présente des moyens de butée (23) permettant de l'immobiliser dans la direction longitudinale du fer.

18. Fer à souder selon l'une des revendications précédentes, dans lequel le corps comprend deux demi-coquilles (1, 2) raccordées entre elles sensiblement dans le plan principal du composant unitaire.

19. Fer à souder selon la revendication 18, dans lequel les deux demi-coquilles sont mutuellement assemblées avec accrochage rigide à l'arrière et avec encliquetage à l'avant.

20. Fer à souder selon l'une des revendications précédentes, dans lequel un appendice séparable (70), venu de moulage avec le corps, présente des moyens de suspension (73) et/ou une surface de réception d'informations pour la présentation du fer sur un lieu de vente ou d'exposition.

21. Composant unitaire (10) pour un fer à souder selon l'une des revendications précédentes, comprenant au moins une panne (11) et une résistance chauffante (15) intimement liées par cuisson.

22. Procédé pour réaliser un composant unitaire selon la revendication 21, dans lequel on dépose, notamment par sérigraphie, la résistance et le cas échéant des conducteurs de liaison sous forme d'un revêtement (12) sur au moins une face de la panne.

23. Procédé selon la revendication 22, dans lequel on dépose un revêtement comportant des résistances (15) et le cas échéant des conducteurs de liaison (16, 17) disposés en différentes zones de la surface d'une plaque (80) et on découpe la plaque ainsi revêtue, notamment au moyen d'un rayon laser, selon des lignes (84) passant chacune entre deux résistances, pour obtenir une multiplicité de composants unitaires.

24. Procédé selon la revendication 23, dans lequel la plaque présente, sur l'un et/ou l'autre de deux bords opposés (81, 82), des saillies (83) destinées chacune à former une pointe de travail d'une panne, qu'on trempe dans un bain d'étamage avant de découper la plaque selon des lignes allant de l'un à l'autre desdits bords opposés.

## Patentansprüche

1. Elektrischer Lötkolben, enthaltend einen eine Griffeinrichtung bildenden Körper (1-3), eine Lötspitze (11), einen mit der Lötspitze in Wärmekontakt befindlichen Heizwiderstand (15) und elektrische Verbindungseinrichtungen (40, 41-43, 16, 17) für die Stromversorgung des Widerstandes, **dadurch gekennzeichnet, daß** die Lötspitze und der Heizwiderstand durch Brennen innig miteinander verbunden sind, um ein einheitliches Bauteil (10) zu bilden.

2. Lötkolben nach Anspruch 1, bei dem die Verbindungseinrichtungen wenigstens einen Verbindungsleiter (16, 17) enthalten, der den Strom einem Anschluß des Widerstandes zuführt und der integraler Bestandteil des einheitlichen Bauteils (10) und innig mit der Lötspitze und dem elektrischen Widerstand durch Brennen verbunden ist.

3. Lötkolben nach einem der Ansprüche 1 und 2, bei dem die Lötspitze die Form einer ebenen Platte von im wesentlichen gleichmäßiger Dicke hat.

4. Lötkolben nach Anspruch 3, bei dem das Verhältnis zwischen der Breite der Lötspitze im Bereich ihres Längenabschnitts, wo sie mit dem Widerstand verbunden ist, und ihrer Dicke größer als 4 ist.

5. Lötkolben nach einem der vorhergehenden Ansprüche, bei dem der Widerstand und gegebenenfalls der Verbindungsleiter als Überzug (12) ausgebildet sind, der insbesondere durch Siebdrucktechnik auf wenigstens einer Seite der Lötspitze aufgebracht ist.

6. Lötkolben nach Anspruch 5, bei dem der Überzug aufweist:
- eine erste elektrisch isolierende Schicht einer Dicke, die für die gewünschte Isolationsspannung geeignet ist:
- eine leitfähige Schicht, die wenigstens zwei Verbindungsleiter (16, 17) ausbildet, die jeweils an einem vorderen Kontaktfleck (18) und einem hinteren Kontaktfleck (19) enden, und eine Widerstandsschicht, die den genannten Heizwiderstand (15) bildet, die in beliebiger Reihenfolge auf der ersten Schicht so angeordnet sind, daß die Widerstandsschicht mit den vorderen Kontaktflecken (19) die Verbindungsleiter mit den hinteren Kontaktflecken in Kontakt sind; und wahlweise
- eine vierte, elektrisch isolierende Schicht, die die zweiten und dritten Schichten mit Ausnahme der vorderen Kontaktflecken (18) bedeckt.

7. Lötkolben nach einem der vorhergehenden Ansprüche, bei dem das Material der Lötspitze einen linearen Wärmeausdehnungskoeffizienten zwischen 5 x 10⁻⁶ und 15 x 10⁻⁶ K⁻¹ im Temperaturbereich zwischen 20 und 400 °C hat.

8. Lötkolben nach Anspruch 7, bei dem das Material der Lötspitze ein ferritischer Edelstahl ist.

9. Lötkolben nach einem der vorhergehenden Ansprüche, bei dem der Widerstand einen positiven Temperaturkoeffizienten von mehr als 2 Ω x K⁻¹ im Temperaturbereich zwischen 20 und 400 °C hat.

10. Lötkolben nach einem der vorhergehenden Ansprüche, bei dem das genannte einheitliche Bauteil an dem Körper über einen hinteren Abschnitt befestigt ist und den Heizwiderstand auf einem vorderen, freitragenden Abschnitt trägt.

11. Lötkolben nach Anspruch 10, bei dem der Körper Belüftungsöffnungen (60) gegenüber dem freitragenden Abschnitt des einheitlichen Bauteils aufweist.

12. Lötkolben nach einem der vorhergehenden Ansprüche, bei dem der Körper den Widerstand mit Abstand abdeckt.

13. Lötkolben nach einem der vorhergehenden Ansprüche, bei dem der Körper zwei nach vorn stehende Lippen (7, 8) aufweist, die jeweils den beiden Hauptflächen des einheitlichen Bauteils gegenüberstehen.

14. Lötkolben nach einem der vorhergehenden Ansprüche, bei dem die elektrischen Verbindungseinrichtungen wenigstens zwei Verbindungselemente (41, 42, 43) aufweisen, die in dem Körper angeordnet sind und das einheitliche Bauteil mit einem Versorgungskabel (40) verbinden.

15. Lötkolben nach Anspruch 14, bei dem die Verbindungselemente einen elastischen Kontaktdruck auf das einheitliche Bauteil ausüben.

16. Lötkolben nach Anspruch 15, bei dem jedes Verbindungselement ein elastisches Blech ist, das durch einen Längsschlitz (53), der an einem ersten Ende endet, in zwei Schenkel unterteilt ist, die zueinander in einer Ebene symmetrisch sind, die in der Längsrichtung des Lötkolbens und senkrecht zu einer ebenen Hauptfläche des einheitlichen Bauteils verläuft, wobei das Blech in einer Querlinie (50) so gebogen ist, daß jeder Schenkel in Nachbarschaft zu dem ersten Ende geeignet ist, sich elastisch an die genannte ebene Hauptfläche anzulegen, während der Bereich (51) des Blechs, der zwischen dessen zweiten Ende und der Biegelinie liegt, so festgehalten ist, daß er sich in einer zur genannten Längsrichtung senkrechten Ebene erstreckt, wobei die Leiterseele (44-46) eines umhüllten Drahtes des Versorgungskabels den Schlitz durchquert, dessen Ränder mit der Seele in Kontakt gelangen, indem sie in die Umhüllung einschneiden.

17. Lötkolben nach einem der vorhergehenden Ansprüche, bei dem die Lötspitze ein Widerlager (23) aufweist, das es erlaubt, sie in Längsrichtung des Lötkolbens festzulegen.

18. Lötkolben nach einem der vorhergehenden Ansprüche, bei dem der Körper zwei Halbschalen (1, 2) aufweist, die miteinander im wesentlichen in der Hauptebene des einheitlichen Bauteils verbunden sind.

19. Lötkolben nach Anspruch 18, bei dem die zwei Halbschalen miteinander hinten durch starre Verankerung und vorn durch Verastung miteinander verbunden sind.

20. Lötkolben nach einem der vorhergehenden Ansprüche, bei dem ein trennbarer Anhang (70), der beim Spritzen des Körpers hergestellt wurde, eine Aufhängungseinrichtung (73) und/oder eine Oberfläche zur Aufnahme von Informationen für die Präsentation des Lötkolbens an einem Verkaufs-/oder Ausstellungsort bildet.

21. Einheitliches Bauteil (10) für einen Lötkolben nach einem der vorhergehenden Ansprüche, enthaltend wenigstens eine Lötspitze (11) und einen Heizwiderstand (15), die durch Brennen innig miteinander verbunden sind.

22. Verfahren zum Herstellen eines einheitlichen Bauteils nach Anspruch 21, bei dem man insbesondere durch Siebdruck den Widerstand und gegebenenfalls Verbindungsleiter in Form eines Überzugs (12) auf wenigstens einer Seite der Lötspitze aufbringt.

23. Verfahren nach Anspruch 22, bei dem man einen Überzug aufbringt, die Widerstände (15) und gegebenenfalls Verbindungsleiter (16, 17) aufweist, die in unterschiedlichen Zonen der Oberfläche einer Platte (80) angeordnet sind, und man die so überzogen Platte insbesondere mittels eines Laserstrahls längs Linien (84) zerschneidet, die jeweils zwischen zwei Widerständen hindurchgeht, um mehrere einheitliche Bauteile zu erhalten.

24. Verfahren nach Anspruch 23, bei dem die Platte an einem und /oder dem anderen von zwei gegenüberliegenden Ränder (81, 82) Vorsprünge (83) aufweist, die jeweils dazu bestimmt sind, einen Arbeitspunkt einer Lötspitze zu bilden, die man in ein Verzinnungsbad taucht, bevor die Platte längs der Linien zerschnitten wird, die vom einen zum anderen der gegenüberliegenden Ränder laufen.

## Claims

1. Electric soldering iron comprising a body (1-3) defining gripping means, a bit (11), a heating resistor (15) in thermal contact with the bit and electrical connections means (40, 41-43, 16, 17) for supplying current to the resistor, **characterised in that** the bit and the heating resistor are tightly joined by firing to form an integral component (10).

2. Soldering iron as claimed in Claim 1, in which the said connection means comprise at least one connecting conductor (16, 17) which carries the current to a terminal of the resistor, is incorporated into the said integral component (10) and is tightly joined to the bit and the electrical resistor by firing.

3. Soldering iron as claimed in one of Claims 1 and 2, in which the bit is in the form of a flat plate having a substantially uniform thickness.

4. Soldering iron as claimed in Claim 3, in which the ratio between the width of the bit, in the region of its length where it is joined to the resistor, and its thickness is greater than 4.

5. Soldering iron as claimed in one of the preceding claims, in which the resistor and, if appropriate, the said connecting conductor are in the form of a coating (12) deposited, particularly by screen-printing, on at least one face of the bit.

6. Soldering iron as claimed in Claim 5, in which the said coating comprises:
- a first electrically insulating layer having a thickness adapted to the desired insulation voltage;
- a conductive layer defining at least two connecting conductors (16, 17) each terminated by an upstream contact (18) and a downstream contact (19), and a resistive layer defining the said heating resistor (15), these layers being deposited in any order on the first layer in such a way that the resistive layer is in contact with the downstream contacts (19) of the connecting conductors; and optionally
- a fourth electrically insulating layer covering the second and third layers with the exception of the said upstream contacts (18).

7. Soldering iron as claimed in one of the preceding claims, in which the material of the bit has a linear thermal expansion coefficient between 5.10⁻⁶ and 15.10⁻⁶ K⁻¹ in the temperature range from 20 to 400°C.

8. Soldering iron as claimed in Claim 7, in which the material of the bit is a ferritic stainless steel.

9. Soldering iron as claimed in one of the preceding claims, in which the resistance has a positive temperature coefficient higher than 2 Ω.K⁻¹ in the temperature range from 20 to 400°C.

10. Soldering iron as claimed in one of the preceding claims, in which the said integral component is fixed to the said body by a rear part and bears the heating resistor on a cantilevered front part.

11. Soldering iron as claimed in Claim 10, in which the body has ventilation holes (60) facing the cantilevered part of the integral component.

12. Soldering iron as claimed in one of the preceding claims, in which the body covers the resistor with a clearance.

13. Soldering iron as claimed in one of the preceding claims, in which the body has two lips (7, 8) projecting towards the front respectively opposite the two principal faces of the integral component.

14. Soldering iron as claimed in one of the preceding claims, in which the electrical connection means comprise at least two connecting elements (41, 42, 43) accommodated in the body and connecting the integral component to a supply cable (40).

15. Soldering iron as claimed in Claim 14, in which the connecting elements exert a resilient contact pressure on the integral component.

16. Soldering iron as claimed in Claim 15, in which each connecting element is a resilient strip divided into two branches, which are symmetrical with one another with respect to a plane oriented in the longitudinal direction of the iron and perpendicular to a principal flat face of the integral component, by a longitudinal slot (53) which opens at a first end, the strip being bent along a transverse line (50) in such a way that each branch, in the vicinity of the said first end, is adapted to be supported resiliently on the said principal flat face whilst the region (51) of the strip between its second end and the bending line is fixed in such a way as to extend in a plane perpendicular to the said longitudinal direction, and the conductive core (44-46) of a sheathed wire of the supply cable passes through the slot of which the edges come into contact with the core by cutting into the sheath.

17. Soldering iron as claimed in one of the preceding claims, in which the bit has stop means (23) which make it possible to immobilise it in the longitudinal direction of the iron.

18. Soldering iron as claimed in one of the preceding claims, in which the body comprises two half-shells (1, 2) which are connected to one another substantially in the principal plane of the integral component.

19. Soldering iron as claimed in Claim 18, in which the two half-shells are mutually assembled by rigid attachment at the rear and by snap fitting at the front.

20. Soldering iron as claimed in one of the preceding claims, in which a separable appendage (70) moulded in one piece with the body has suspension means (73) and/or a surface to receive information for the presentation of the iron at a sales or display point.

21. Integral component (10) for a soldering iron as claimed in one of the preceding claims, comprising at least one bit (11) and a heating resistor (15) which are tightly joined by firing.

22. Method of producing an integral component as claimed in Claim 21, in which the resistor and, if appropriate, the connecting conductors are deposited by screen-printing in the form of a coating (12) on at least one face of the bit.

23. Method as claimed in Claim 22, in which a coating is deposited which includes resistors (15) and, if appropriate, connecting conductors (16, 17) disposed in different zones of the surface of a plate (80) and the plate thus coated is cut, particularly by means of a laser beam, along lines (84) each passing between two resistors in order to obtain a multiplicity of integral components.

24. Method as claimed in Claim 23, in which the plate has on one and/or the other of two opposing edges (81, 82) projections (83) which are each intended to form a working tip of a bit which is immersed in a tinning bath before the plate is cut along lines going from one of the said opposing edges to the other.
